# EUROPEAN PATENT SPECIFICATION

(11) **EP 2 000 743 B1**
(45) Date of publication and mention of the grant of the patent: **18.12.2013**
(21) Application number: 07252249.3
(22) Date of filing: 04.06.2007
(51) Int. Cl.: F28D 1/02, F28D 15/00, F24J 3/08, F24F 5/00

(54) **Temperature equilibrating methodology and installation with water supply system**
Temperaturausgleichsverfahren und -installation mit einem Wasserversorgungssystem
Méthodologie d'équilibrage de température et installation dans un système d'alimentation en eau

(43) Date of publication of application: 10.12.2008
(60) Divisional application: 11173696.3
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- WO-A-03/012348
- DE-A1- 2 834 442
- DE-A1- 2 930 484
- JP-A- 2000 146 356
- US-A- 5 727 621
- US-A- 6 053 239

## Description

### BACKGROUND OF THE INVENTION

### (a) Field of the Invention

The present invention is related to a methodology and installation for temperature equilibrating conduction, and more particularly, to the use of specific piping from a water supply system and the water running in the pipe as a carrier to conduct the thermal energy in the stratum to a subject matter on the ground.

### (b) Description of the Prior Art:

Whereas reliance upon air conditioning system in summer time in conventional buildings and upon electric power or fuel for heating purpose in winter time consume massive energy source. Furthermore, in bitter cold days, frozen water pipe of the conventional water supply system exposed or buried just beneath the surface of the earth, accumulation of snow on roof and frozen road are often blamed for causing disasters.

DE 2834442 discloses a method of heating a building using heat extracted from a central water supply, the pipe of which includes an underground portion.

### SUMMARY OF THE INVENTION

The primary purpose of the present invention is to provide a methodology and installation to execute temperature equilibration thermal transmission between the thermal energy in the deeper stratum and a subject matter on the ground designated for transmission of thermal energy by a closed piping comprised of underground water pipe buried in the underground for a water supply system and piping disposed on the ground to transmit the thermal energy in the stratum conducted by the underground pipe through the current running in the piping. More particularly, the invention provides a thermal energy transmission system as set out below in claim 1. Preferred features of the invention include those contained in the accompanying dependent claims.

### BRIEF DESCRIPTION OF THE DRAWINGS

Fig. 1 is a schematic view showing a layout of a conventional water supply piping and a piping in a building.
Fig. 2 is a schematic view of a thermal energy transmission system in accordance with the present invention to perform open fluid circulation to an open space.
Fig. 3 is a schematic view of a second thermal energy transmission system in accordance with the invention to perform open fluid circulation to an interior space in a building or other closed or semi-closed structure.
Fig. 4 is a schematic view of a third thermal energy transmission system in accordance with the invention to perform closed fluid circulation to an open space.
Fig. 5 is a schematic view of a fourth thermal energy transmission system in accordance with the invention to perform closed fluid circulation to an interior space in a building or other closed or semi-closed structure.

### DETAILED DESCRIPTION OF THE PREFERRED EMBODIMENTS

In accordance with the present invention, methodology and installation for temperature equilibration by means of a water supply system operates on having an underground water pipe of the conventional water supply system buried in the stratum and water running in the pipe as carriers to be incorporated with a flow passage comprised of a pipe constructed on the ground, a temperature equilibrating object, and a pump. Whereas it is a well-known fact that the stratum 4~6 meters below the surface of the earth maintains a normal temperature range between 12~6 °C all year round, the current pumped by the pump, or the circulating current resulted from the convection effect due to temperature difference when the hotter water runs to the cooler water and vice versa, or the current resulted from shunting effect, functions in systems described hereinafter as a carrier of thermal energy to execute thermal transmission of temperature equilibration between the thermal energy in the stratum and a subject matter on ground to receive the thermal energy transmission, thus to replace or support the conventional air conditioning system that consumes massive energy and further to save energy.

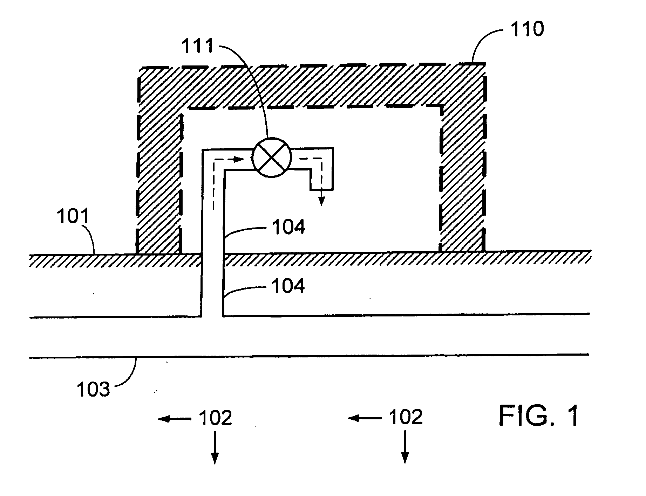

Referring to Fig. 1 for a layout of a conventional water supply piping and a piping of a building, wherein,
--- 101 relates to the surface of the earth;
--- 102 relates to a deeper stratum where the normal temperature maintains within the range of 12~16 °C;
--- 103 relates to an underground water pipe of a conventional water supply system buried in the deeper stratum 102;
--- 104 relates to a water supply branch to be connected to where between a water valve 111 at the subscriber's and the underground water pipe 103 to deliver water from the water supply system to the subscriber; and
--- 111 relates to the water valve at the subscriber's building 110 that serves as a flow switch to fetch the water at random.

Within the layout as described above, the following problems often take place in bitter cold winter:
(1) The water inside the conventional water supply branch 104 that is closer to the surface of the earth 101 or that is exposed from the surface of the earth 101 is vulnerable to get frozen in bitter cold winter thus to block the current; and
(2) The roof of the building is sometimes threatened by collapse due to the weight and pressure imposed by accumulated snow or ice thereon.

Referring to the drawings, a preferred thermal energy transmission system has a cladding chamber structure for temperature equilibration provided to the ground or underground water supply piping of a water supply system. Indirectly through the interior of the cladding chamber, the thermal energy carried by the water current in the water supply piping flows to another gaseous or liquid state fluid of the subject matter into an open space, building, or other closed or semi-closed structure of the subject matter for temperature equilibration to perform the indirect transmission of thermal energy for the purpose of temperature equilibration.

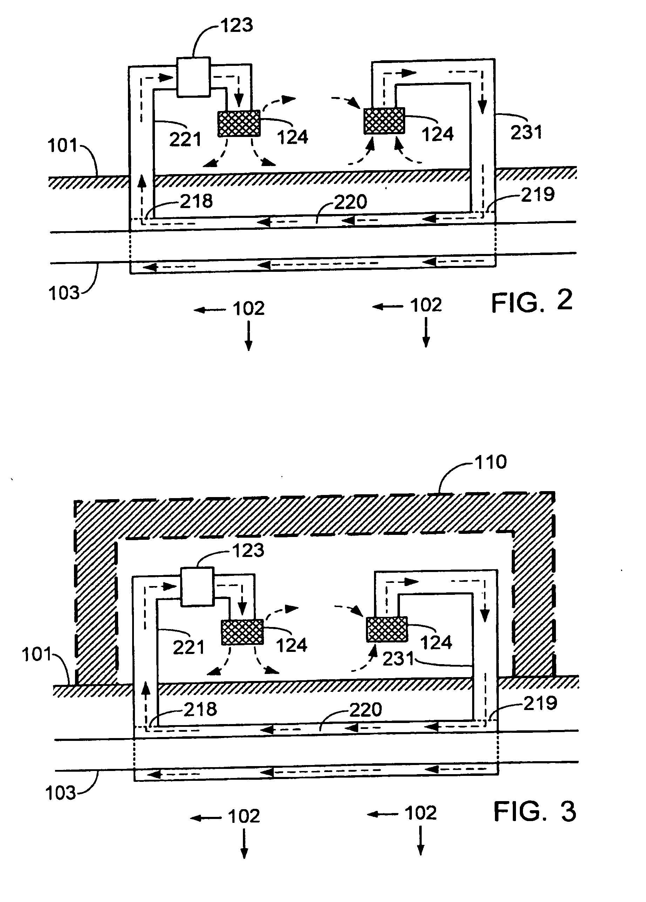

Fig. 2 shows a schematic view of a preferred embodiment of the present invention, wherein a system of a cladding chamber structure for temperature equilibration is provided to perform open fluid circulation to an open space.

The system includes a cladding chamber structure 220 for temperature equilibration disposed at where surrounds a certain section of the underground water pipe 103 of the water supply system buried in a deep stratum 102; both end surfaces are closed to the cladding chamber structure 220 for temperature equilibration. One or a plurality of fluid inlet 218 and a fluid piping 221 leading to an open space above the surface 101 of the earth are disposed at one end in the vicinity of the closed end surface; one or a plurality of fluid outlet 219 and a fluid piping 231 leading to the open space are disposed on the other end of the cladding chamber structure 220 to allow the gaseous or liquid state fluid flowing in and out. The fluid may perform convection circulation by the effects that the cooler descends and the hotter ascends, or driven by a motor with the installation of a liquid pump 123, or driven by other mechanical kinetics or by manual so to pump the fluid passing through the cladding chamber structure 220 into the fluid piping 221 to the open space. The fluid in the open space flows through the fluid piping 231 back to the cladding chamber structure 220 so to perform the temperature equilibration transmission of indirect conduction of thermal energy between the water supply system and the open space. The fluid piping 221 and another fluid piping 231 are respectively leading to the open space to perform the open fluid circulation; and the optional filtration device 124 may be each disposed to the fluid inlet and outlet of the fluid piping 221 and another fluid piping 231.

Fig. 3 shows a schematic view of another preferred embodiment yet of the present invention, wherein the system includes the cladding chamber structure for temperature equilibration to perform open fluid circulation to an interior space in a building or other closed or semi-closed structure.

The system includes a cladding chamber structure 220 for temperature equilibration disposed at where surrounds a certain section of the underground water pipe 103 of the water supply system; both end surfaces are closed to the cladding chamber structure 220 for temperature equilibration. One or a plurality of fluid inlet 218 and the fluid piping 221 leading to the space inside the closed or semi-closed structure in the building 110 are disposed at one end in the vicinity of the closed end surface; one or a plurality of fluid outlet 219 and a fluid piping 231 leading to the space inside the closed or semi-closed structure in the building 110 are disposed on the other end of the cladding chamber structure 220 to allow the gaseous or liquid state fluid flowing in and out. The fluid may perform convection circulation by the effects that the cooler descends and the hotter ascends, or driven by a motor with the installation of a liquid pump 123, or driven by other mechanical kinetics or by manual so to pump the fluid passing through the cladding chamber structure 220 into the fluid piping 221 to the space inside the building 110 or other closed or semi-closed structure. The fluid then flows through the fluid piping 231 back to the cladding chamber structure 220 so to perform the temperature equilibration transmission of indirect conduction of thermal energy between the water supply system and the space inside the building 110 or other closed or semi-closed structure. The fluid piping 221 and another fluid piping 231 are respectively leading to the interior space in the building 110 or other closed or semi-closed structure to perform the open fluid circulation; and the optional filtration device 124 may be each disposed to the fluid inlet and outlet of the fluid piping 221 and another fluid piping 231.

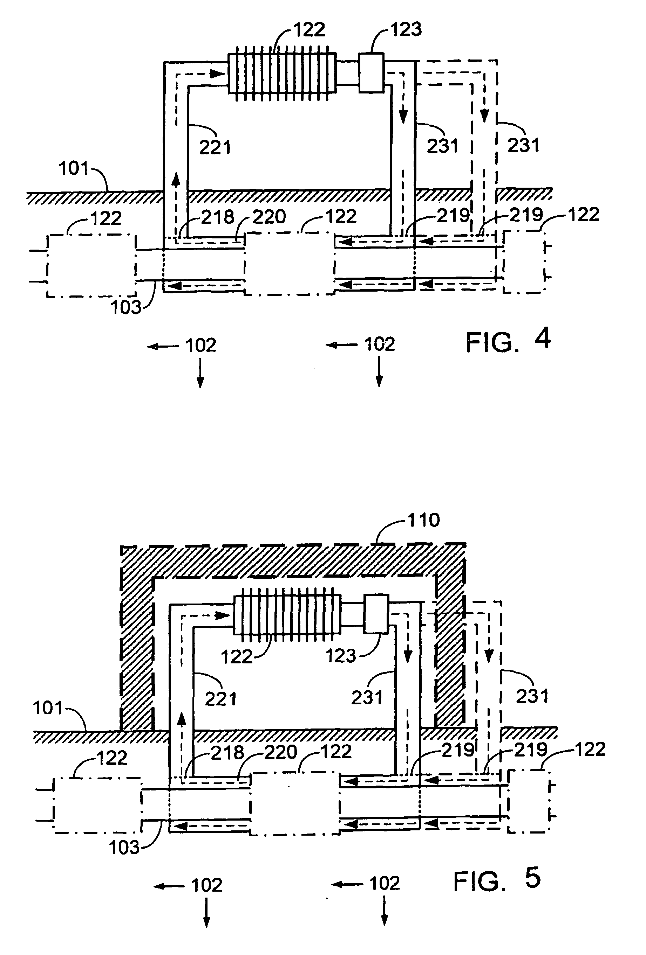

Fig. 4 shows a schematic view of another preferred embodiment yet of the present invention, wherein the system includes the cladding chamber structure for temperature equilibration to perform closed fluid circulation to an open space.

The system includes a cladding chamber structure 220 for temperature equilibration disposed at where surrounds a certain section of the underground water pipe 103 of the water supply system; both end surfaces are closed to the cladding chamber structure 220 for temperature equilibration. One or a plurality of fluid inlet 218 and the fluid piping 221 leading to the open space are disposed at one end in the vicinity of the closed end surface; one or a plurality of fluid outlet 219 and a fluid piping 231 leading to the open space are disposed on the other end of the cladding chamber structure 220 to allow the gaseous or liquid state fluid flowing in and out. The fluid may perform convection circulation by the effects that the cooler descends and the hotter ascends, or driven by a motor with the installation of a liquid pump 123, or driven by other mechanical kinetics or by manual so to pump the fluid passing through the cladding chamber structure 220 into the fluid piping 221 to the temperature equilibrating installation 122 disposed in the open space. The fluid then flows through the fluid piping 231 back to the cladding chamber structure 220 so to perform the temperature equilibration transmission of indirect conduction of thermal energy between the water supply system and the open space through temperature equilibrating installation 122. The fluid piping 221 and another fluid piping 231 are respectively leading to the temperature equilibrating installation 122 disposed in the open space to perform the closed fluid circulation for transmission of temperature equilibration.

Fig. 5 shows a schematic view of another preferred embodiment yet of the present invention, wherein the system includes the cladding chamber structure for temperature equilibration to perform closed fluid circulation to an interior space in a building or other closed or semi-closed structure.

The system includes a cladding chamber structure 220 for temperature equilibration disposed at where surrounds a certain section of the underground water pipe 103 of the water supply system; both end surfaces are closed to the cladding chamber structure 220 for temperature equilibration. One or a plurality of fluid inlet 218 and the fluid piping 221 leading to the interior space in a building 110 or a closed or semi-closed structure are disposed at one end in the vicinity of the closed end surface; one or a plurality of fluid outlet 219 and a fluid piping 231 leading to the interior space in a building 110 or a closed or semi-closed structure are disposed on the other end of the cladding chamber structure 220 to allow the gaseous or liquid state fluid flowing in and out. The fluid may perform convection circulation by the effects that the cooler descends and the hotter ascends, or driven by a motor with the installation of a liquid pump 123, or driven by other mechanical kinetics or by manual so to pump the fluid passing through the cladding chamber structure 220 into the fluid piping 221 to the temperature equilibrating installation 122 disposed in the interior space in the building 110 or other closed or semi-closed structure. The fluid then flows through the fluid piping 231 back to the cladding chamber structure 220 so to perform the temperature equilibration transmission of indirect conduction of thermal energy between the water supply system and the interior space in the building 110 or other closed or semi-closed structure through the temperature equilibrating installation 122. The fluid piping 221 and another fluid piping 231 are respectively leading to the temperature equilibrating installation 122 disposed in the interior space in the building 110 or other closed or semi-closed structure to perform the closed fluid circulation for transmission of temperature equilibration.

The subject matter for the temperature equilibration operation performed by the methodology and installation of temperature equilibration with a water supply system of the present invention includes:
(1) Various types of open space; or
(2) Open space on the surface of earth; or
(3) Shallow stratum; or
(4) Interior space of a semi-closed or closed building; or
(5) Interior space of other semi-closed or closed structure.

The building referred in these preferred embodiments described above for the methodology and installation of temperature equilibration with a water supply system of the present invention includes house, warehouse, or any building in column or any other geometric form, or any other designated building comprised of a semi-closed or closed structure designed as desired. Other functioning for the general house to live in, the interior space may be further operated to accommodate:
(1) Tooling machine, test and inspection instruments, observation instruments, industrial facilities, mechanical facilities, power machineries, and electro-mechanical facilities that demands specific working temperature; or
(2) Cooling installations, electricity storage installations; or
(3) Storage of solid, liquid, or gaseous state chemicals.

With the present invention, the natural thermal energy from the water supply system either cools or maintains the installations and facilities in a certain range of temperature.

Accordingly, the methodology and installation of temperature equilibration with a water supply system of the present invention by operating on the natural thermal energy (ranging between 12~16 °C) in the stratum absorbed by the underground water pipe of an existing water supply system to have current as a carrier to flow through a pipe disposed at where closer to the surface of the earth, exposed from the ground or in a building to execute heat transmission of temperature equilibration to offer lower cost, summary work, and precise function; therefore, this application for a patent is duly filed.

## Claims

1. A thermal energy transmission system comprising an underground water pipe (103) and a fluid circulation structure, the underground water pipe (103) forming part of a conventional water supply system and being buried in a deep stratum (102) which maintains a normal temperature within a predetermined range over a long period of time, the fluid circulation structure being arranged and configured to transfer thermal energy from the water in the underground water pipe (103) to a region above the ground, or to transfer thermal energy from a region above the ground to the water in the underground pipe (103), **characterized in that** a cladding chamber structure (220) for temperature equilibration is disposed around a certain section of the underground water pipe (103), the transfer of thermal energy being effected by a fluid circulating in the fluid circulation structure,
wherein one or a plurality of fluid inlet (218) and a fluid piping (221) leading to said region above the ground are disposed at one end of the cladding chamber structure (220) in the vicinity of the closed end surface and one or a plurality of fluid outlet (219) and a fluid piping (231) leading to said region above the ground are disposed on the other end of the cladding chamber structure (220) to allow the fluid to flow in and out.

2. A system as claimed in claim 1, wherein the cladding chamber structure (220) surrounds a portion of the underground water pipe.

3. A system as claimed in claim 1 or claim 2, further comprising a temperature equilibrating installation (122) associated with the cladding chamber structure (220).

4. A system as claimed in claim 1, wherein both end surfaces of the cladding chamber structure (220) being closed for temperature equilibration; the fluid performing convection circulation as a result of cooler fluid descending and hotter fluid ascending, or is driven by a motor with the installation of a pump (123), or driven by other mechanical kinetics or by manual energy so to pump the fluid passing through the cladding chamber structure (220) into the fluid piping (221) to the region above the ground; the fluid in the region above the ground flowing through the fluid piping (231) back to the cladding chamber structure (220) so to perform the temperature equilibration transmission of indirect conduction of thermal energy between the water supply system and the region above the ground; the fluid piping (221) and another fluid piping (231) respectively leading to the region above the ground to perform the fluid circulation; and an optional filtration device (124) may be disposed at each of the fluid inlet and outlet of the fluid piping (221) and the other fluid piping (231).

5. A system as claimed in claim 1, the system including a cladding chamber structure (220) for temperature equilibration disposed to surround a certain section of the underground water pipe (103) of the water supply system; both end surfaces of the cladding chamber structure (220) being closed for temperature equilibration; the fluid performing convection circulation as a result of cooler fluid descending and hotter fluid ascending, or is driven by a motor with the installation of a pump (123), or driven by other mechanical kinetics or by manual energy so as to pump the fluid passing through the cladding chamber structure (220) into the fluid piping (221) to a space inside a building (110) or other closed or semi-closed structure; the fluid then flowing through the fluid piping (231) back to the cladding chamber structure (220) so to perform temperature equilibration transmission of indirect conduction of thermal energy between the water supply system and the space inside the building (110) or other closed or semi-closed structure; the fluid piping (221) and another fluid piping (231) respectively leading to the interior space in the building (110) or other closed or semi-closed structure to perform fluid circulation; and an optional filtration device 124 may be disposed at each of the fluid inlet and outlet of the fluid piping (221) and the other fluid piping (231).

6. A system as claimed in claim 1, the system including a cladding chamber structure (220) for temperature equilibration disposed to surround a certain section of the underground water pipe (103) of the water supply system; both end surfaces of the cladding chamber structure (220) being closed for temperature equilibration; the fluid performing convection circulation as a result of cooler fluid descending and hotter fluid ascending, or is driven by a motor with the installation of a pump (123), or driven by other mechanical kinetics or by manual energy so to pump the fluid passing through the cladding chamber structure (220) into the fluid piping (221) to a temperature equilibrating installation (122) disposed in the region above the ground; the fluid then flowing through the fluid piping (231) back to the cladding chamber structure (220) so to perform temperature equilibration transmission by indirect conduction of thermal energy between the water supply system and the region above the ground through a temperature equilibrating installation (122); the fluid piping (221) and another fluid piping (231) respectively leading to the temperature equilibration device (122) disposed in the region above the ground to perform fluid circulation for transmission of temperature equilibration.

7. A system as claimed in claim 1, the system including a cladding chamber structure (220) for temperature equilibration disposed to surround a certain section of the underground water pipe (103) of the water supply system; both end surfaces of the cladding chamber structure (220) being closed for temperature equilibration; the fluid performing convection circulation as a result of cooler fluid descending and hotter fluid ascending, or is driven by a motor with the installation of a pump (123), or driven by other mechanical kinetics or by manual energy so to pump the fluid passing through the cladding chamber structure (220) into the fluid piping (221) to a temperature equilibrating installation (122) disposed in an interior space in a building (110) or other closed or semi-closed structure; the fluid then flowing through the fluid piping (231) back to the cladding chamber structure (220) so to perform temperature equilibration transmission by indirect conduction of thermal energy between the water supply system and the interior space in the building (110) or other closed or semi-closed structure through a temperature equilibrating installation (122); the fluid piping (221) and another fluid piping (231) respectively leading to the temperature equilibrating installation (122) disposed in the interior space in the building (110) or other closed or semi-closed structure to perform the fluid circulation for transmission of temperature equilibration.

8. A system as claimed in any one of the preceding claims, wherein the system includes:
(1) various types of regions above the ground; or
(2) regions above the ground on the surface of earth; or
(3) a shallow stratum; or
(4) an interior space of a semi-closed nature; or
(5) a closed building or interior space of other semi-closed or closed structure.

9. A system as claimed in any one of claims 5, 7 and 8, wherein the building includes a house, a warehouse, or any building in column or any other geometric form, or any other designated building comprised of a semi-closed or closed structure; or functioning as a general house to live in, the interior space may be further operated to accommodate.
(1) industrial facilities, mechanical facilities, power machineries, and electro-mechanical facilities that demand a specific working temperature; or
(2) cooling installations, electricity storage installations; or
(3) storage of solid, liquid, or gaseous state chemicals; the natural thermal energy from the water supply system either cooling or maintaining the installations and facilities in a certain range of temperature.

10. A system as claimed in claim 1, wherein the fluid circulation structure comprises an open structure; wherein a pair of conduits are fixed to the cladding chamber structure in such a manner that each has one end in fluid communication with the interior of the cladding chamber structure, the other ends of the conduits being open and terminating in said region, said other ends of the conduits constituting respectively a fluid entrance to, and a fluid exit from, said region.

11. A system as claimed in claim 1, wherein the fluid circulation structure comprises a closed structure.

## Patentansprüche

1. Thermisches Energieübertragungssystem, umfassend eine unterirdische Wasserrohrleitung (103) und eine Flüssigkeitsumwälzungsstruktur, wobei die unterirdische Wasserrohrleitung (103) einen Teil eines konventionellen Wasserversorgungssystems bildet und in ein tiefes Stratum (102) eingegraben ist, das über einen langen Zeitraum eine normale Temperatur in einem vorbestimmten Bereich behält, wobei die Flüssigkeitsumwälzungsstruktur angeordnet und konfiguriert ist, thermische Energie aus dem Wasser in der unterirdischen Wasserrohrleitung (103) in einen Bereich über der Erde zu übertragen oder thermische Energie aus einem Bereich über der Erde in das Wasser in der unterirdischen Rohrleitung (103) zu übertragen, **dadurch gekennzeichnet, dass** um einen bestimmten Abschnitt der unterirdischen Wasserrohrleitung (103) eine Verkleidungskammerstruktur (220) für den Temperaturausgleich positioniert ist, wobei die Übertragung der thermischen Energie durch eine Flüssigkeitsumwälzung in der Flüssigkeitsumwälzungsstruktur erfolgt,
wobei ein oder eine Mehrzahl von Flüssigkeitseinlässen (218) und eine Flüssigkeitsleitung (221), die in den Bereich über der Erde führt, an einem Ende der Verkleidungskammerstruktur (220) in der Nähe der geschlossenen Endfläche positioniert sind und ein oder eine Mehrzahl von Flüssigkeitsauslässen (219) und eine Flüssigkeitsleitung (231), die in den Bereich über der Erde führt, am anderen Ende der Verkleidungskammerstruktur (220) positioniert sind, um es der Flüssigkeit zu gestatten, zu- und abzufließen.

2. System nach Anspruch 1, wobei die Verkleidungskammerstruktur (220) einen Teil der unterirdischen Wasserrohrleitung umgibt.

3. System nach Anspruch 1 oder Anspruch 2, des Weiteren umfassend eine Temperaturausgleichsinstallation (122) im Zusammenhang mit der Verkleidungskammerstruktur (220).

4. System nach Anspruch 1, wobei beide Endflächen der Verkleidungskammerstruktur (220) für einen Temperaturausgleich geschlossen sind; die Flüssigkeit als Folge davon, dass kühlere Flüssigkeit absteigt und wärmere Flüssigkeit aufsteigt, Konvektionsumwälzung durchführt oder durch einen Motor mit der Installation einer Pumpe (123) angetrieben wird, oder durch andere mechanische Kinetik oder durch manuelle Energie angetrieben wird, um die durch die Verkleidungskammerstruktur (220) fließende Flüssigkeit in die Flüssigkeitsleitung (221) in den Bereich über der Erde zu pumpen; die Flüssigkeit im Bereich über der Erde durch die Flüssigkeitsleitung (231) zurück in die Verkleidungskammerstruktur (220) fließt, um die Temperaturausgleichsübertragung der indirekten Leitung von thermischer Energie zwischen dem Wasserversorgungssystem und dem Bereich über der Erde durchzuführen; die Flüssigkeitsleitung (221) bzw. die andere Flüssigkeitsleitung (231) in den Bereich über der Erde führen, um die Flüssigkeitsumwälzung durchzuführen; und eine optionale Filtrationsvorrichtung (124) an jedem des Flüssigkeitseinlasses und -auslasses der Flüssigkeitsleitung (221) und der anderen Flüssigkeitsleitung (231) positioniert sein kann.

5. System nach Anspruch 1, wobei das System eine Verkleidungskammerstruktur (220) für einen Temperaturausgleich enthält, die positioniert ist, einen bestimmten Abschnitt der unterirdischen Wasserrohrleitung (103) des Wasserversorgungssystems zu umgeben; beide Endflächen der Verkleidungskammerstruktur (220) für den Temperaturausgleich geschlossen sind; die Flüssigkeit als Folge davon, dass kühlere Flüssigkeit absteigt und wärmere Flüssigkeit aufsteigt, Konvektionsumwälzung durchführt oder durch einen Motor mit der Installation einer Pumpe (123) angetrieben wird, oder durch andere mechanische Kinetik oder durch manuelle Energie angetrieben wird, um die durch die Verkleidungskammerstruktur (220) fließende Flüssigkeit in einen Raum in einem Gebäude (110) oder einer anderen geschlossenen oder halb geschlossenen Struktur zu pumpen; die Flüssigkeit dann durch die Flüssigkeitsleitung (231) zurück in die Verkleidungskammerstruktur (220) fließt, um die Temperaturausgleichsübertragung der indirekten Leitung von thermischer Energie zwischen dem Wasserversorgungssystem und dem Raum im Gebäude (110) oder der anderen geschlossenen oder halb geschlossenen Struktur durchzuführen; die Flüssigkeitsleitung (221) bzw. die andere Flüssigkeitsleitung (231) in den Innenraum im Gebäude (110) oder der anderen geschlossenen oder halb geschlossenen Struktur führen, um die Flüssigkeitsumwälzung durchzuführen; und eine optionale Filtrationsvorrichtung (124) an jedem des Flüssigkeitseinlasses und -auslasses der Flüssigkeitsleitung (221) und der anderen Flüssigkeitsleitung (231) positioniert sein kann.

6. System nach Anspruch 1, wobei das System eine Verkleidungskammerstruktur (220) für einen Temperaturausgleich enthält, die positioniert ist, einen bestimmten Abschnitt der unterirdischen Wasserrohrleitung (103) des Wasserversorgungssystems zu umgeben; beide Endflächen der Verkleidungskammerstruktur (220) für den Temperaturausgleich geschlossen sind; die Flüssigkeit als Folge davon, dass kühlere Flüssigkeit absteigt und wärmere Flüssigkeit aufsteigt, Konvektionsumwälzung durchführt oder durch einen Motor mit der Installation einer Pumpe (123) angetrieben wird, oder durch andere mechanische Kinetik oder durch manuelle Energie angetrieben wird, um die durch die Verkleidungskammerstruktur (220) fließende Flüssigkeit in die Flüssigkeitsleitung (221) zu einer im Bereich über der Erde positionierten Temperaturausgleichsinstallation (122) zu pumpen; die Flüssigkeit dann durch die Flüssigkeitsleitung (231) zurück in die Verkleidungskammerstruktur (220) fließt, um die Temperaturausgleichsübertragung durch indirekte Leitung von thermischer Energie zwischen dem Wasserversorgungssystem und dem Bereich über der Erde durch eine Temperaturausgleichsinstallation (122) durchzuführen; die Flüssigkeitsleitung (221) bzw. die andere Flüssigkeitsleitung (231) zu der im Bereich über der Erde positionierten Temperaturausgleichsinstallation (122) führen, um die Flüssigkeitsumwälzung für die Übertragung des Temperaturausgleichs durchzuführen.

7. System nach Anspruch 1, wobei das System eine Verkleidungskammerstruktur (220) für einen Temperaturausgleich enthält, die positioniert ist, einen bestimmten Abschnitt der unterirdischen Wasserrohrleitung (103) des Wasserversorgungssystems zu umgeben; beide Endflächen der Verkleidungskammerstruktur (220) für den Temperaturausgleich geschlossen sind; die Flüssigkeit als Folge davon, dass kühlere Flüssigkeit absteigt und wärmere Flüssigkeit aufsteigt, Konvektionsumwälzung durchführt oder durch einen Motor mit der Installation einer Pumpe (123) angetrieben wird, oder durch andere mechanische Kinetik oder durch manuelle Energie angetrieben wird, um die durch die Verkleidungskammerstruktur (220) fließende Flüssigkeit in die Flüssigkeitsleitung (221) zu einer in einem Innenraum eines Gebäudes (110) oder einer anderen geschlossenen oder halb geschlossenen Struktur positionierten Temperaturausgleichsinstallation (122) zu pumpen; die Flüssigkeit dann durch die Flüssigkeitsleitung (231) zurück in die Verkleidungskammerstruktur (220) fließt, um die Temperaturausgleichsübertragung durch indirekte Leitung von thermischer Energie zwischen dem Wasserversorgungssystem und dem Innenraum des Gebäudes (110) oder der anderen geschlossenen oder halb geschlossenen Struktur durch eine Temperaturausgleichsinstallation (122) durchzuführen; die Flüssigkeitsleitung (221) bzw. die andere Flüssigkeitsleitung (231) zu der im Innenraum eines Gebäudes (110) oder der anderen geschlossenen oder halb geschlossenen Struktur positionierten Temperaturausgleichsinstallation (122) führen, um die Flüssigkeitsumwälzung für die Übertragung des Temperaturausgleichs durchzuführen.

8. System nach einem der vorhergehenden Ansprüche, wobei das System Folgendes umfasst:
(1) unterschiedliche Arten von Bereichen über der Erde; oder
(2) Bereiche über der Erde auf der Oberfläche der Erde; oder
(3) ein oberflächennahes Stratum; oder
(4) einen Innenraum von halb geschlossener Art; oder
(5) ein geschlossenes Gebäude oder einen Innenraum einer anderen halb geschlossenen oder geschlossenen Struktur.

9. System nach einem der Ansprüche 5, 7 und 8, wobei das Gebäude ein Haus, ein Lagerhaus oder jedes Gebäude in Säulen- oder jeder anderen geometrischen Form oder jedes andere designierte Gebäude einschließt, das aus einer halb geschlossenen oder geschlossenen Struktur besteht oder als allgemeines Haus funktioniert, um darin zu leben, wobei der Innenraum des Weiteren genutzt werden kann, um Folgendes unterzubringen:
(1) industrielle Einrichtungen, mechanische Einrichtungen, Kraftmaschinen und elektromechanische Einrichtungen, die eine spezifische Betriebstemperatur erfordern; oder
(2) Kühlinstallationen, Stromspeicherinstallationen; oder
(3) Lager für Chemikalien im festen, flüssigen oder gasförmigen Zustand;
wobei die natürliche thermische Energie des Wasserversorgungssystems die Installationen und Einrichtungen entweder kühlt oder sie in einem bestimmten Temperaturbereich hält.

10. System nach Anspruch 1, wobei die Flüssigkeitsumwälzungsstruktur eine offene Struktur aufweist; wobei ein Paar von Kanälen derart an der Verkleidungskammerstruktur befestigt ist, dass von jedem ein Ende in Flüssigkeitskommunikation mit dem Innenraum der Verkleidungskammerstruktur steht und die anderen Enden der Kanäle offen sind und in dem Bereich enden, wobei die anderen Enden der Kanäle einen Flüssigkeitseingang in den bzw. einen Flüssigkeitsausgang aus dem Bereich darstellen.

11. System nach Anspruch 1, wobei die Flüssigkeitsumwälzungsstruktur eine geschlossene Struktur aufweist.

## Revendications

1. Système de transmission d'énergie thermique comprenant un tuyau d'eau souterrain (103) et une structure de circulation de fluide, le tuyau d'eau souterrain (103) faisant partie d'un système d'alimentation en eau classique et étant enterrée dans une strate profonde (102) qui maintient une température normale à l'intérieur d'une plage prédéterminée pendant une longue période de temps, la structure de circulation de fluide étant agencée et configurée pour transférer de l'énergie thermique de l'eau dans le tuyau d'eau souterrain (103) à une région au-dessus du sol, ou pour transférer de l'énergie thermique d'une région au-dessus du sol à l'eau dans le tuyau souterrain (103), **caractérisé par le fait qu'**une structure de chambre de gainage (220) pour équilibrage de température est disposée autour d'une certaine section du tuyau d'eau souterrain (103), le transfert d'énergie thermique étant réalisé par un fluide circulant dans la structure de circulation de fluide,
dans lequel une ou une pluralité d'entrées de fluide (218) et une tuyauterie de fluide (221) conduisant à ladite région au-dessus du sol sont disposées à une première extrémité de la structure de chambre de gainage (220) au voisinage de la surface d'extrémité fermée et une ou une pluralité de sorties de fluide (219) et une tuyauterie de fluide (231) conduisant à ladite région au-dessus du sol sont disposées sur l'autre extrémité de la structure de chambre de gainage (220) pour permettre au fluide d'entrer et de sortir.

2. Système selon la revendication 1, dans lequel la structure de chambre de gainage (220) entoure une partie du tuyau d'eau souterrain.

3. Système selon l'une des revendications 1 ou 2, comprenant en outre une installation d'équilibrage de température (122) associée à la structure de chambre de gainage (220).

4. Système selon la revendication 1, dans lequel les deux surfaces d'extrémité de la structure de chambre de gainage (220) sont fermées pour un équilibrage de température ; le fluide réalise une circulation par convection en raison du fait que du fluide plus froid descend et du fluide plus chaud monte, ou est entraîné par un moteur avec l'installation d'une pompe (123) ou entraîné par une autre cinétique mécanique ou par une énergie manuelle de façon à pomper le fluide passant à travers la structure de chambre de gainage (220) dans la tuyauterie de fluide (221) jusqu'à la région au-dessus du sol ; le fluide dans la région au-dessus du sol s'écoule à travers la tuyauterie de fluide (231) en retour jusqu'à la structure de chambre de gainage (220) de façon à réaliser la transmission d'équilibrage de température par conduction indirecte d'énergie thermique entre le système d'alimentation en eau et la région au-dessus du sol ; la tuyauterie de fluide (221) et l'autre tuyauterie de fluide (231) conduisant respectivement à la région au-dessus du sol pour réaliser la circulation de fluide ; et un dispositif de filtration facultatif (124) peut être disposé à chaque entrée et sortie de fluide de la tuyauterie de fluide (221) et de l'autre tuyauterie de fluide (231).

5. Système selon la revendication 1, le système comprenant une chambre de structure de gainage (220) pour équilibrage de température, disposée pour entourer une certaine section du tuyau d'eau souterrain (103) du système d'alimentation en eau ; les deux surfaces d'extrémité de la structure de chambre de gainage (220) étant fermées pour un équilibrage de température ; le fluide réalisant une circulation par convection en raison du fait que du fluide plus froid descend et du fluide plus chaud monte, ou est entraîné par un moteur avec l'installation d'une pompe (123) ou entraîné par une autre cinétique mécanique ou par une énergie manuelle de façon à pomper le fluide passant à travers la structure de chambre de gainage (220) dans la tuyauterie de fluide (221) jusqu'à un espace à l'intérieur d'un bâtiment (110) ou autre structure fermée ou semi-fermée ; le fluide s'écoulant ensuite à travers la tuyauterie de fluide (231) en retour jusqu'à la structure de chambre de gainage (220) de façon à réaliser une transmission d'équilibrage de température par conduction indirecte d'énergie thermique entre le système d'alimentation en eau et l'espace à l'intérieur du bâtiment (110) ou autre structure fermée ou semi-fermée ; la tuyauterie de fluide (221) et l'autre tuyauterie de fluide (231) conduisant respectivement à l'espace intérieur dans le bâtiment (110) ou autre structure fermée ou semi-fermée pour réaliser la circulation de fluide ; et un dispositif de filtration facultatif 124 peut être disposé à chaque entrée et sortie de fluide de la tuyauterie de fluide (221) et de l'autre tuyauterie de fluide (231).

6. Système selon la revendication 1, le système comprenant une structure de chambre de gainage (220) pour équilibrage de température, disposée pour entourer une certaine section du tuyau d'eau souterrain (103) du système d'alimentation en eau ; les deux surfaces d'extrémité de la structure de chambre de gainage (220) étant fermées pour un équilibrage de température ; le fluide réalisant une circulation par convection en raison du fait que du fluide plus froid descend et du fluide plus chaud monte, ou est entraîné par un moteur avec l'installation d'une pompe (123) ou entraîné par une autre cinétique mécanique ou par une énergie manuelle de façon à pomper le fluide passant à travers la structure de chambre de gainage (220) dans la tuyauterie de fluide (221) jusqu'à une installation d'équilibrage de température (122) disposée dans la région au-dessus du sol ; le fluide s'écoulant ensuite à travers la tuyauterie de fluide (231) en retour jusqu'à la structure de chambre de gainage (220) de façon à réaliser une transmission d'équilibrage de température par conduction indirecte d'énergie thermique entre le système d'alimentation en eau et la région au-dessus du sol à travers une installation d'équilibrage de température (122) ; la tuyauterie de fluide (221) et l'autre tuyauterie de fluide (231) conduisant respectivement au dispositif d'équilibrage de température (122) disposé dans la région au-dessus du sol pour réaliser une circulation de fluide pour une transmission d'équilibrage de température.

7. Système selon la revendication 1, le système comprenant une structure de chambre de gainage (220) pour équilibrage de température, disposée pour entourer une certaine section du tuyau d'eau souterrain (103) du système d'alimentation en eau ; les deux surfaces d'extrémité de la structure de chambre de gainage (220) étant fermées pour un équilibrage de température ; le fluide réalisant une circulation par convection en raison du fait que du fluide plus froid descend et du fluide plus chaud monte, ou est entraîné par un moteur avec l'installation d'une pompe (123) ou entraîné par une autre cinétique mécanique ou par une énergie manuelle de façon à pomper le fluide passant à travers la structure de chambre de gainage (220) dans la tuyauterie de fluide (221) jusqu'à une installation d'équilibrage de température (122) disposée dans un espace intérieur dans un bâtiment (110) ou autre structure fermée ou semi-fermée ; le fluide s'écoulant ensuite à travers la tuyauterie de fluide (231) en retour jusqu'à la structure de chambre de gainage (220) de façon à réaliser une transmission d'équilibrage de température par conduction indirecte d'énergie thermique entre le système d'alimentation en eau et l'espace intérieur dans le bâtiment (110) ou autre structure fermée ou semi-fermée à travers une installation d'équilibrage de température (122) ; la tuyauterie de fluide (221) et l'autre tuyauterie de fluide (231) conduisant respectivement à l'installation d'équilibrage de température (122) disposée dans l'espace intérieur dans le bâtiment (110) ou autre structure fermée ou semi-fermée pour réaliser la circulation de fluide pour une transmission d'équilibrage de température.

8. Système selon l'une quelconque des revendications précédentes, dans lequel le système comprend :
(1) divers types de régions au-dessus du sol ; ou
(2) des régions au-dessus du sol sur la surface de la Terre ; ou
(3) une strate superficielle ; ou
(4) un espace intérieur d'une nature semi-fermée ; ou
(5) un bâtiment ou espace intérieur fermé d'une autre structure semi-fermée ou fermée.

9. Système selon l'une quelconque des revendications 5, 7 et 8, dans lequel le bâtiment comprend une maison, un entrepôt ou tout bâtiment en colonne ou toute autre forme géométrique, ou tout autre bâtiment désigné constitué par une structure semi-fermée ou fermée ; ou servant de maison générale pour y vivre, l'espace intérieur pouvant être en outre agencé pour recevoir :
(1) des installations industrielles, des installations mécaniques, des machines motorisées et des installations électromécaniques qui demandent une température de travail spécifique ; ou
(2) des installations de refroidissement, des installations de stockage d'électricité ; ou
(3) un stockage de produits chimiques à l'état solide, liquide ou gazeux ;
l'énergie thermique naturelle du système d'alimentation en eau refroidissant ou maintenant les bâtiments et installations dans une certaine plage de température.

10. Système selon la revendication 1, dans lequel la structure de circulation de fluide comprend une structure ouverte ; une paire de conduites est fixées à la structure de chambre de gainage d'une manière telle que chacune a une extrémité en communication fluidique avec l'intérieur de la structure de chambre de gainage, les autres extrémités des conduites étant ouvertes et se terminant dans ladite région, lesdites autres extrémités des conduites constituant respectivement une entrée de fluide vers et une sortie de fluide à partir de ladite région.

11. Système selon la revendication 1, dans lequel la structure de circulation de fluide comprend une structure fermée.
